# EUROPÄISCHE PATENTSCHRIFT

(11) **EP 0 632 104 B1**
(45) Veröffentlichungstag und Bekanntmachung des Hinweises auf die Patenterteilung: **06.08.1997**
(21) Anmeldenummer: 94109170.4
(22) Anmeldetag: 15.06.1994
(51) Int. Cl.: C09B 29/36, C09B 29/01, C09B 35/031, C09B 35/26, C09B 35/30, D21H 21/28

(54) **Basische Azofarbstoffe**
Basic azodyes
Colorants azoiques basiques

(30) Priorität: 28.06.1993 DE 4321422
(43) Veröffentlichungstag der Anmeldung: 04.01.1995
(73) Patentinhaber: BAYER AG, 51368 Leverkusen (DE)
(72) Erfinder: Hassenrück, Karin, Dr., D-40468 Düsseldorf (DE); Wild, Peter, Dr., D-51519 Odenthal (DE)

(56) Entgegenhaltungen:
- DE-A- 2 362 581
- FR-A- 2 169 872

## Beschreibung

Die vorliegende Erfindung betrifft neue basische Azofarbstoffe, Verfahren zu deren Herstellung und deren Verwendung zum Färben von synthetischen und natürlichen mit basischen Farbstoffen färbbaren Materialien. Aus dem Stand der Technik sind bereits basische Azofarbstoffe ähnlicher Struktur bekannt, die zum Färben und Bedrucken von synthetischen Materialien geeignet sind (vgl. DE-OS 22 63 109).

Die neuen basischen Azofarbstoffe entsprechen der allgemeinen Formel 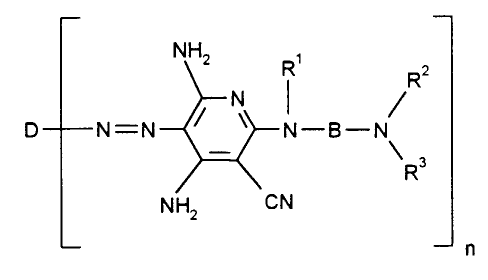 worin
- B: für ein Brückenglied steht,
- R¹: für Wasserstoff, Alkyl oder Aryl steht, oder
- R¹ und R²: zusammen mit B und den beiden Stickstoffatomen, an die sie gebunden sind, einen gegebenenfalls substituierten 5- oder 6-gliedrigen Heterocyclus bilden, und in diesem Fall B für eine direkte Bindung, -CH₂- oder -CH₂CH₂- steht,
- R² und R³: unabhängig voneinander für Wasserstoff, Alkyl, Alkenyl oder Aralkyl stehen, oder
- R² und R³: gemeinsam mit dem Stickstoffatom, an das sie gebunden sind, einen gegebenenfalls substituierten 5- oder 6-gliedrigen Heterocyclus bilden,
- n: für 2 steht, und
- D: für den Rest einer Tetrazokomponente der Formel 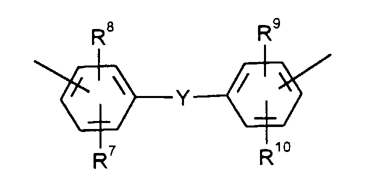 steht,
worin
- R⁷ bis R¹⁰: unabhängig voneinander für Wasserstoff, SO₃H, C₁-C₄-Alkyl, C₁-C₄-Alkoxy, Chlor oder Brom stehen,
- Y: für eine direkte Bindung oder ein Brückenglied steht,
und worin die cyclischen und acyclischen Reste ihrerseits durch in der Farbstoffchemie übliche Reste substituiert sein können.

Unter Alkylresten werden insbesondere solche mit 1 - 8 C-Atomen verstanden und unter Alkenylresten solche mit 2 - 4 C-Atomen.
Substituenten der Alkyl- und Arylreste sind beispielsweise Halogen, vorzugsweise Fluor, Chlor oder Brom, Hydroxy, C₁-C₄-Alkoxy, Cyan, Amino, Mono- und Di-C₁-C₄-alkylamino. Die Arylreste können zusätzlich durch C₁-C₄-Alkyl substituiert sein.

Aryl steht vorzugsweise für C₆-C₁₀-Aryl, vorzugsweise für Phenyl oder Naphthyl, insbesondere für Phenyl.
Vorzugsweise steht Aralkyl für Benzyl oder Phenylethyl, die beispielsweise im Phenylkern durch Fluor, Chlor, Brom, C₁-C₄-Alkyl, C₁-C₄-Alkoxy, Nitro, Cyan, Amino, Mono- und Di-C₁-C₄-alkylamino substituiert sein können.

Halogen steht in allen Definitionen vorzugsweise für Fluor, Chlor oder Brom.

Als Substituenten für die cyclischen und acyclischen Reste kommen beispielsweise Halogen, Sulfo, Hydroxy, C₁-C₄-Alkoxy, C₁-C₄-Alkyl, Cyano, Amino, Mono- oder Di-C₁-C₄-alkylamino in Frage.

Als B kommen beispielsweise in Betracht:

-CH₂CH₂-, -CH₂CH₂CH₂-, -CH₂CH₂-NHCH₂CH₂-,

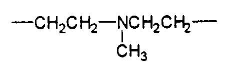

-CH₂CH₂CH₂-NH-CH₂CH₂CH₂-,

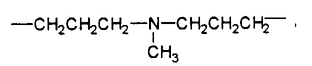

-CH(CH₃)CH₂-, -CH₂CH₂CH₂CH₂-, -CH₂CH₂CH₂CH₂CH₂-, -CH(CH₃)CH₂CH₂CH₂-,

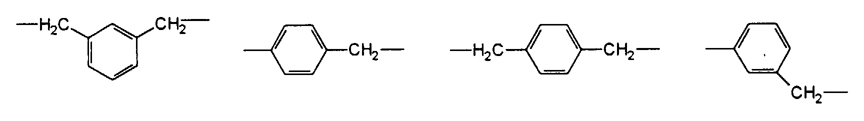

wobei die freie Bindung am Phenylrest an N-R² gebunden ist.

Als Brückenglied Y kommen vorzugsweise in Betracht:
-CO-NH-, -CO-, -NH-CO-NH-, -CH₂-CH₂-, -CH=CH-, -CH₂-, -C(CH₃)₂-, 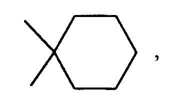 -O-, -S-, -NH-, 〉N-C₁-C₄-Alkyl, -N=N-, -NH-CO-CH=CH-CO-NH-, -NH-CO-CH₂-CH₂-CO-NH- und 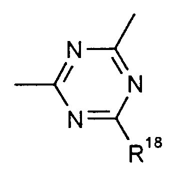 wobei
- R¹⁸: für Alkyl oder Aryl, vorzugsweise für gegebenenfalls durch Hydroxy, C₁-C₄-Alkoxy, Chlor oder Brom substituiertes C₁-C₄-Alkyl oder für gegebenenfalls durch Hydroxy, C₁-C₄-Alkoxy, Chlor, Brom oder C₁-C₄-Alkyl substituiertes Phenyl oder für einen Rest der Formel 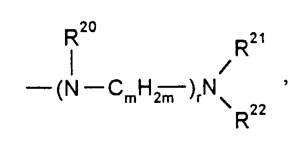 -O-R²³ oder -S-R²⁴
steht, worin
- R²⁰, R²¹, R²², R²³ und R²⁴: unabhängig voneinander für Wasserstoff, Alkyl, Alkenyl, Aryl, Aralkyl oder Cycloalkyl, vorzugsweise für Wasserstoff, jeweils gegebenenfalls durch Hydroxy, Halogen, Cyan oder C₁-C₄-Alkoxy substituiertes C₁-C₄-Alkyl oder C₂-C₄-Alkenyl oder für jeweils gegebenenfalls durch Halogen, C₁-C₄-Alkyl, Hydroxy oder C₁-C₄-Alkoxy substituiertes Benzyl, Phenylethyl, Phenyl, Naphthyl oder Cyclohexyl stehen, oder
- R²¹ und R²²: zusammen mit dem N-Atom an das sie gebunden sind für einen gegebenenfalls substituierten 5- oder 6-gliedrigen Ring, vorzugsweise für jeweils gegebenenfalls durch C₁-C₄-Alkyl substituiertes Pyrrolidin, Piperidin, Morpholin oder Piperazin stehen, dessen externes Stickstoffatom jeweils durch gegebenenfalls OH- oder NH₂- substituiertes C₁-C₄-Alkyl alkyliert oder quaterniert sein kann,
- m: für 2 oder 3 steht und
- r: für 0 oder 1 steht.
Besonders zu erwähnender Substituent R¹⁸ ist:
Amino, Methylamino, Dimethylamino, Ethylamino, Diethylamino, 2-Hydroxyethylamino, Bis-(2-hydroxyethyl)-amino, Allylamino, Diallylamino, Methoxyethylamino, Sulfato-ethylamino, Carboxymethylamino, N-Methyl-N-carboxymethyl-amino, Carboxyethylamino, N-Methyl-N-sulfomethylamino, Sulfoethylamino, N-Methyl-N-sulfoethylamino, Cyclohexylamino, Pyrrolidino, Piperidino, 1-Methylpiperazino, 1-(β-Aminoethyl-)piperazino, 1-(3-Hydroxyethyl-)piperazino, Morpholino, 4-Morpholinamino, Benzylamino, gegebenenfalls substituiertes Phenyl- oder Naphthylamino.

Von den Farbstoffen der Formel (I) sind diejenigen bevorzugt
worin
- R¹: für Wasserstoff, für gegebenenfalls durch Halogen, Hydroxy, C₁-C₄-Alkoxy, Cyan, Amino, Mono- oder Di-C₁-C₄-alkylamino substituiertes C₁-C₄-Alkyl, oder für gegebenenfalls durch Halogen, C₁-C₄-Alkyl, C₁-C₄-Alkoxy substituiertes C₆-C₁₀-Aryl steht,
- R² und R³: unabhängig voneinander für Wasserstoff, für jeweils gegebenenfalls durch Hydroxy, C₁-C₄-Alkoxy, Chlor, Brom oder Cyan substituiertes C₁-C₄-Alkyl, oder C₃- oder C₄-Alkenyl oder für Benzyl oder Phenylethyl, die jeweils gegebenenfalls durch Hydroxy, C₁-C₄-Alkoxy, Chlor, Brom, Cyan oder C₁-C₄-Alkyl substituiert sind, stehen oder
- R¹ und R²: zusammen mit B und den beiden Stickstoffatomen, an die sie gebunden sind,
a) für den Fall, daß B für eine direkte Bindung steht, einen gegebenenfalls durch C₁-C₄-Alkyl substituierten Hexahydropyridazinring bilden,
b) für den Fall, daß B für -CH₂- steht, einen gegebenenfalls durch C₁-C₄-Alkyl substituierten Hexahydropyrimidinring bilden oder
c) für den Fall, daß B für -CH₂CH₂- steht, einen gegebenenfalls durch C₁-C₄-Alkyl substituierten Piperazinring bilden, oder
- R² und R³: zusammen mit dem Stickstoffatom, an das sie gebunden sind, einen gegebenenfalls durch C₁-C₄-Alkyl substituierten Pyrrolidin-, Piperidin-, Morpholin-, Hexahydropyridazin-, Hexahydropyrimidin- oder Piperazinring bilden, wobei die C₁-C₄-Alkylsubstituenten gegebenenfalls durch Chlor, Brom, Hydroxy, Cyan, Amino, Mono- oder Di-C₁-C₄-alkylamino substituiert sind, und
- B: für gegebenenfalls durch
-O- , -S-, 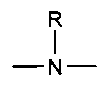 unterbrochenes C₂-C₅-Alkylen steht,worin
R für Wasserstoff, für gegebenenfalls durch Chlor, Brom, Hydroxy, Cyan, C₁-C₄-Alkoxy, Amino, Mono- und Di-C₁-C₄-alkylamino substituiertes C₁-C₄-Alkyl, für gegebenenfalls durch Fluor, Chlor, Brom, C₁-C₄-Alkyl, C₁-C₄-Alkoxy substituiertes C₆-C₁₀-Aryl steht, oder
B für einen Rest der Formel 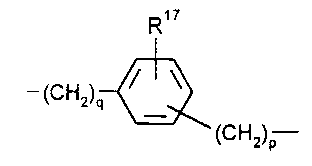 steht, worin
q für 0, 1, 2 oder 3 steht,
p für 1, 2 oder 3 steht,
(CH₂)ₚ an den Rest NR²R³ gebunden ist, und
R¹⁷ für Wasserstoff, C₁-C₄-Alkyl, C₁-C₄-Alkoxy, Chlor oder Brom steht. Besonders bevorzugt sind Farbstoffe der Formel (I), worin
- R¹: für Wasserstoff steht,
- R² und R³: unabhängig voneinander für C₁-C₄-Alkyl, β- oder γ-Hydroxy-C₂-C₄-alkyl oder Benzyl stehen, oder
- R² und R³: zusammen mit dem Stickstoffatom, an das sie gebunden sind, einen Pyrrolidin-, Morpholin-, Piperidin- oder Piperazinring bilden, dessen terminales Stickstoffatom zusätzlich durch β-Hydroxyethyl substituiert sein kann,
- B: für -CH₂CH₂-, -CH₂CH₂CH₂-, -CH(CH₃)CH₂- oder -CH₂CH₂CH₂CH₂-steht,
- D: für einen Rest der Formel 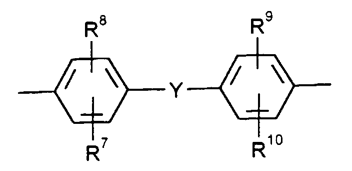 und n für 2 steht,
- Y: für
-CO-NH-, -CO-, -NH-CO-NH-, -CH₂-CH₂-, -CH=CH-, -CH₂-, -C(CH₃)₂-, 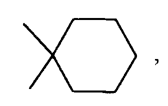 -O-, -S-, -NH-, 〉N-C₁-C₄-Alkyl, -N=N-, -NH-CO-CH=CH-CO-NH-, -NH-CO-CH₂-CH₂-CO-NH- oder 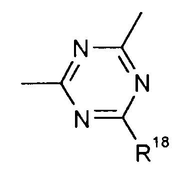 steht, wobei
- R¹⁸: für Alkyl, Aryl, vorzugsweise für gegebenenfalls durch Hydroxy, C₁-C₄-Alkoxy, Chlor oder Brom substituiertes C₁-C₄-Alkyl oder für gegebenenfalls durch Hydroxy, C₁-C₄-Alkoxy, Chlor, Brom oder C₁-C₄-Alkyl substituiertes Phenyl oder für einen Rest der Formel 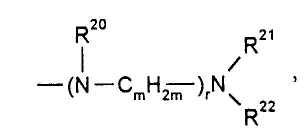 -O-R²³ oder -S-R²⁴ steht,
worin
m für 2 oder 3,
r für 0 oder 1 und
R²⁰, R²¹, R²² und R²³ unabhängig voneinander für Wasserstoff, Alkyl, Alkenyl, Aryl, Aralkyl oder Cycloalkyl stehen, oder
R²¹ und R²² gemeinsam mit dem N-Atom, an das sie gebunden sind, einen 5- oder 6-gliedrigen Ring bilden, und
R⁷ - R¹⁰ unabhängig voneinander für Wasserstoff, SO₃H, C₁-C₄-Alkyl, C₁-C₄-Alkoxy, Chlor oder Brom stehen.

Die Farbstoffe der allgemeinen Formel (I) können in an sich bekannter Weise durch Diazotierung der Amine der Formel

D-(NH₂)ₙ (II)

worin
D und n die oben angegebene Bedeutung haben
und Kupplung mit den Verbindungen der Formel 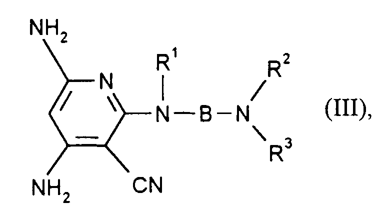 worin
R¹, R², R³ und B die oben angegebene Bedeutung haben,
hergestellt werden.

Die Verbindungen der Formel (III) können in an sich bekannter Weise hergestellt werden durch Umsetzung der Amine der Formel 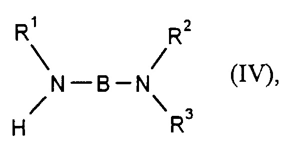 worin
R¹, R², R³ und B die oben angegebene Bedeutung haben
mit Verbindungen der Formel 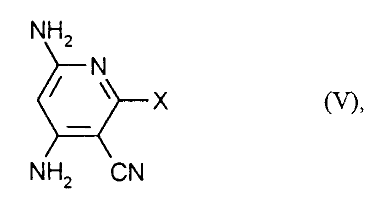 worin
- X: für Brom oder Chlor steht.

Die Verbindungen der Formeln (II), (IV) und (V) sind in der organischen Chemie allgemein bekannt.

Die Diazotierung der Amine (II) erfolgt im allgemeinen in bekannter Weise bei Temperaturen zwischen 0 und 50°C.

Als Diamine der allgemeinen Formel (II) mit n = 2, kommen z. B. in Betracht:

4,4'-Diaminoazobenzol, 3,3'-Dimethylbenzidin, 4,4'-Diamino-benzanilid, 3,3'-Dichlorbenzidin, 4,4'-Diaminobenzophenon, 4,4'-Diamino-N,N'-diphenylharnstoff, 4,4'-Diaminodiphenylamin, 1,2-Bis-(4'-Aminophenyl)-ethan, 4,4'-Diaminodiphenylamin, 1,1-Bis-(4'-aminophenyl)-methan, 2,2-Bis-(4-aminophenyl)-propan, 1,1-Bis-(4-aminophenyl)-cyclohexan, 4,4'-Diaminostilben, 3,3'-Dianisidin, 4,4'-Diaminodiphenylsulfid, 2,4-Bis[(3'-aminophenyl-amino)]-6-dimethylamino-triazin.

Die Kupplung erfolgt üblicherweise bei Temperaturen zwischen 0 und 50°C, vorzugsweise bei Temperaturen zwischen 0 und 30°C bei pH-Werten zwischen 2 und 10, vorzugsweise zwischen 4 und 7. Die Farbstoffe können isoliert und getrocknet werden, sie können aber auch mit geeigneten Lösungsmitteln in stabile, konzentrierte Lösungen überführt werden.

Solche Lösungen sind z. B. wäßrige Lösungen von Mineralsäuren und/oder organischen Säuren, z. B. Salzsäure, Schwefelsäure, Phosphorsäure, Ameisensäure, Essigsäure, Glykolsäure, Milchsäure, Methansulfonsäure.

Als Lösungsmittel können aber auch organische Lösungsmittel wie z.B. Ethylenglykol, Diglykol, Triglykol, Glycerin, Ethylglykolmonomethylether, Diglykolmonoethylether, Diglykolmonobutylether u.ä. verwendet oder mit verwendet werden.

Die erfindungsgemäßen Farbstoffe färben basisch anfärbbare Materialien wie Polyacrylnitril, sauer modifizierten Polyester und Polyamid, Wolle und Leder, aber auch cellulosehaltige Materialien wie Baumwolle und Celluloseregenerat-Fasern, insbesondere Papier mit guten Echtheiten in gelben Tönen.

Die Farbstoffe können zum Papiermasse-Färben oder zur Papieroberflächenfärbung eingesetzt werden. Sie sind geeignet für geleimte und für ungeleimte Papiersorten ausgehend von gebleichtem oder ungebleichtem Zellstoff verschiedener Provenienz wie Nadel- oder Laubholz-Sulfit- und/oder -Sulfat-Zellstoff.

Das Färben erfolgt vorzugsweise bei pH-Werten von 4 bis 8, insbesondere pH 5 bis 7. Die Färbetemperatur beträgt im allgemeinen 10 bis 50°C, vorzugsweise etwa 20°C.

Die bei der Papierfärbung und -herstellung üblichen Hilfsmittel und Füllstoffe können auch beim Einsatz der erfindungsgemäßen Farbstoffe mitverwendet werden. Die Farbstoffe besitzen bei der Papierfärbung ein ausgezeichnetes Ziehvermögen.

Die mit den erfindungsgemäßen Farbstoffen erhaltenen Papierfärbungen zeichnen sich durch gute Wasserechtheit (Ausblutechtheit) sowie Säure-, Alkali- und Alaun-Echtheit aus. Hervorzuheben ist die Brillanz und Klarheit der gelben Farbtöne. Ferner ist das Kombinationsverhalten mit geeigneten Farbstoffen sehr gut.

### Herstellung der Farbstoffe

### Beispiel 1

21,2 g (0,03 mol) 4,4'-Diamino-N,N'-diphenylharnstoff werden in 160 ml Wasser und 16 ml Salzsäure (36 Vol.%) verrührt.
Mit 41 ml 10 %iger Natriumnitrit-Lösung wird auf die übliche Weise diazotiert. Man rührt 1 Stunde nach und zerstört überschüssiges Nitrit mit Amidosulfonsäure.

30,9 g (0,078 mol 58,9 %) 2-(3-N,N-Dimethylaminopropyl)-3-cyano-4,6-diaminopyridin werden in 550 ml H₂O gelöst und in die obige Diazotierung bei 0 - 5°C eingetropft. Der pH-Wert wird mit wäßriger NaOH auf 7,5 gestellt.
Der salzhaltige Farbstoff wird abgesaugt und getrocknet.
Ausbeute: 82 % der Theorie.

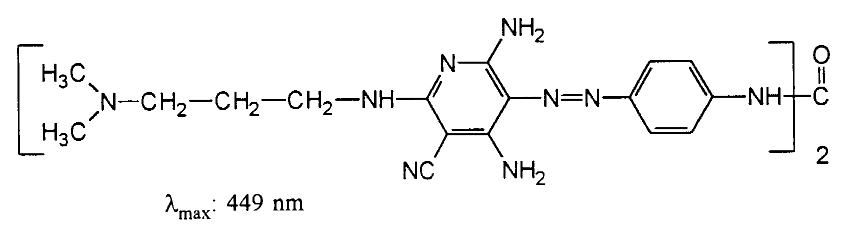

### Beispiel 2

7,7 g (0,03 mol) 4,4'-Diaminobenzanilid werden wie die Tetrazokomponente des Beispiels 1 tetrazotiert. Die Kupplung auf die in Beispiel 1 angegebene Kupplungskomponente ergibt den Farbstoff der Formel 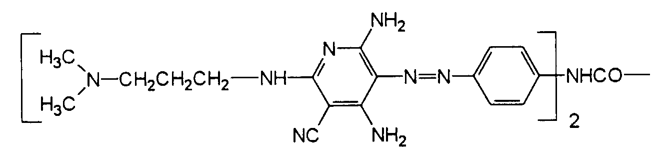
λₘₐₓ: 459 nm
Ausbeute: 76 % der Theorie

## Patentansprüche

1. Azofarbstoffe der Formel 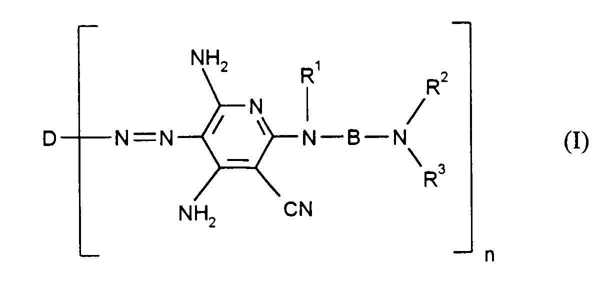 worin
B für ein Brückenglied steht,
R¹ für Wasserstoff, Alkyl oder Aryl steht, oder
R¹ und R² zusammen mit B und den beiden Stickstoffatomen, an die sie gebunden sind, einen gegebenenfalls substituierten 5- oder 6-gliedrigen Heterocyclus bilden, und in diesem Fall B für eine direkte Bindung, -CH₂- oder -CH₂CH₂- steht,
R² und R³ unabhängig voneinander für Wasserstoff, Alkyl, Alkenyl oder Aralkyl stehen, oder
R² und R³ gemeinsam mit dem Stickstoffatom, an das sie gebunden sind, einen gegebenenfalls substituierten 5- oder 6-gliedrigen Heterocyclus bilden,
n für 2 steht, und
D für den Rest einer Tetrazokomponente der Formel 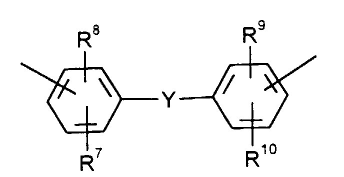
steht,
worin
R⁷ bis R¹⁰ unabhängig voneinander für Wasserstoff, SO₃H, C₁-C₄-Alkyl, C₁-C₄-Alkoxy, Chlor oder Brom stehen,
Y für eine direkte Bindung oder ein Brückenglied steht,
und worin die cyclischen und acyclischen Reste ihrerseits durch in der Farbstoffchemie übliche Reste substituiert sein können.

2. Azofarbstoffe gemäß Anspruch 1
worin
R¹ für Wasserstoff, für gegebenenfalls durch Halogen, Hydroxy, C₁-C₄-Alkoxy, Cyan, Amino, Mono- oder Di-C₁-C₄-alkylamino substituiertes C₁-C₄-Alkyl, oder für gegebenenfalls durch Halogen, C₁-C₄-Alkyl, C₁-C₄-Alkoxy substituiertes C₆-C₁₀-Aryl steht,
R² und R³ unabhängig voneinander für Wasserstoff, für jeweils gegebenenfalls durch Hydroxy, C₁-C₄-Alkoxy, Chlor, Brom oder Cyan substituiertes C₁-C₄-Alkyl, oder C₃- oder C₄-Alkenyl oder für Benzyl oder Phenylethyl, die jeweils gegebenenfalls durch Hydroxy, C₁-C₄-Alkoxy, Chlor, Brom, Cyan oder C₁-C₄-Alkyl substituiert sind, stehen oder
R¹ und R² zusammen mit B und den beiden Stickstoffatomen, an die sie gebunden sind,
a) für den Fall, daß B für eine direkte Bindung steht, einen gegebenenfalls durch C₁-C₄-Alkyl substituierten Hexahydropyridazinring bilden,
b) für den Fall, daß B für -CH₂- steht, einen gegebenenfalls durch C₁-C₄-Alkyl substituierten Hexahydropyrimidinring bilden oder
c) für den Fall, daß B für -CH₂CH₂- steht, einen gegebenenfalls durch C₁-C₄-Alkyl substituierten Piperazinring bilden, oder
R² und R³ zusammen mit dem Stickstoffatom, an das sie gebunden sind, einen gegebenenfalls durch C₁-C₄-Alkyl substituierten Pyrrolidin-, Piperidin-, Morpholin-, Hexahydropyridazin-, Hexahydropyrimidin- oder Piperazinring bilden, wobei die C₁-C₄-Alkylsubstituenten gegebenenfalls durch Chlor, Brom, Hydroxy, Cyan, Amino, Mono- oder Di-C₁-C₄-alkylamino substituiert sind, und
B für gegebenenfalls durch
-O-, -S- oder 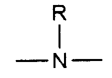 unterbrochenes C₂-C₅-Alkylen steht,worin
R für Wasserstoff, für gegebenenfalls durch Chlor, Brom, Hydroxy, Cyan, C₁-C₄-Alkoxy, Amino, Mono- und Di-C₁-C₄-alkylamino substituiertes C₁-C₄-Alkyl, für gegebenenfalls durch Fluor, Chlor, Brom, C₁-C₄-Alkyl, C₁-C₄-Alkoxy substituiertes C₆-C₁₀-Aryl steht, oder
B für einen Rest der Formel 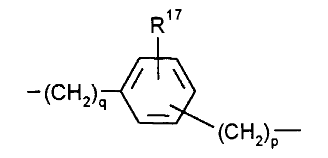 steht, worin
q für 0, 1, 2 oder 3 steht,
p für 1, 2 oder 3 steht,
(CH₂)ₚ an den Rest NR²R³ gebunden ist, und
R¹⁷ für Wasserstoff, C₁-C₄-Alkyl, C₁-C₄-Alkoxy, Chlor oder Brom steht.

3. Farbstoffe gemäß Ansprüchen 1 und 2, worin Y für eine direkte Bindung oder ein Brückenglied der Formel
-CO-NH-, -CO-, -NH-CO-NH-, -CH₂-CH₂-, -CH=CH-, -CH₂-, -C(CH₃)₂-, 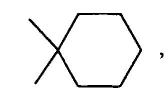 -O-, -S-, -NH-, 〉N-C₁-C₄-Alkyl, -N=N-, -NH-CO-CH=CH-CO-NH-, -NH-CO-CH₂-CH₂-CO-NH- oder 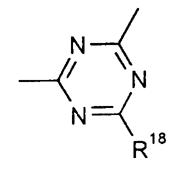 steht, wobei
R¹⁸ für Alkyl, Aryl oder für einen Rest der Formel 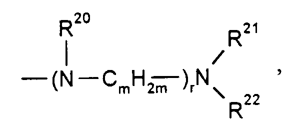 -O-R²³ oder -S-R²⁴ steht, worin
m für 2 oder 3,
r für 0 oder 1 und
R²⁰, R²¹, R²² und R²³ unabhängig voneinander für Wasserstoff, Alkyl, Alkenyl, Aryl, Aralkyl oder Cycloalkyl stehen, oder
R²¹ und R²² gemeinsam mit dem N-Atom, an das sie gebunden sind, einen gegebenenfalls substituierten 5- oder 6-gliedrigen Ring bilden.

4. Farbstoffe des Anspruchs 3,
wobei
R¹⁸ für gegebenenfalls durch Hydroxy, C₁-C₄-Alkoxy, Chlor oder Brom substituiertes C₁-C₄-Alkyl oder für gegebenenfalls durch Hydroxy, C₁-C₄-Alkoxy, Chlor, Brom oder C₁-C₄-Alkyl substituiertes Phenyl oder für einen Rest der Formel 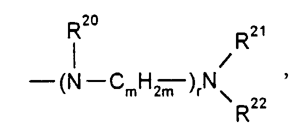 -O-R²³ oder -S-R²⁴ steht,
worin
R²⁰, R²¹, R²², R²³ und R²⁴ unabhängig voneinander für Wasserstoff, jeweils gegebenenfalls durch Hydroxy, Halogen, Cyan oder C₁-C₄-Alkoxy substituiertes C₁-C₄-Alkyl, oder C₂-C₄-Alkenyl oder für jeweils gegebenenfalls durch Halogen, C₁-C₄-Alkyl, Hydroxy oder C₁-C₄-Alkoxy substituiertes Benzyl, Phenylethyl, Phenyl, Naphthyl oder Cyclohexyl stehen oder
R²¹ und R²² zusammen mit dem N-Atom, an das sie gebunden sind für jeweils gegebenenfalls durch C₁-C₄-Alkyl substituiertes Pyrrolidon, Piperidin, Morpholin oder Piperazin stehen, dessen externes Stickstoffatom durch gegebenenfalls OH-oder NH₂- substituiertes C₁-C₄-Alkyl alkyliert oder quaterniert sein kann.

5. Farbstoffe des Anspruchs 1 der Formel 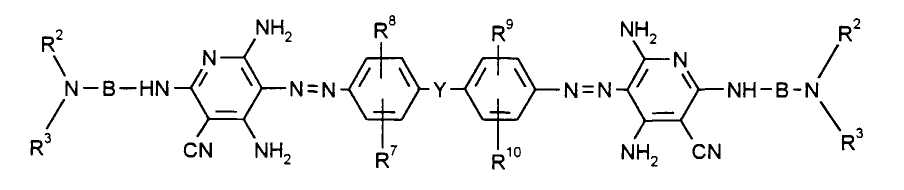 worin
R² und R³ unabhängig voneinander für C₁-C₄-Alkyl, β- oder γ-Hydroxy-C₂-C₄-alkyl oder Benzyl stehen, oder
R² und R³ zusammen mit dem Stickstoffatom, an das sie gebunden sind, einen Pyrrolidin-, Morpholin-, Piperidin- oder Piperazinring bilden, dessen terminales Stickstoffatom zusätzlich durch β-Hydroxyethyl substituiert sein kann,
B für -CH₂CH₂-, -CH₂CH₂CH₂-, -CH(CH₃)CH₂- oder -CH₂CH₂CH₂CH₂- steht,
Y für
-CO-NH-, -CO-, -NH-CO-NH-, -CH₂-CH₂-, -CH=CH-, -CH₂-, -C(CH₃)₂-, 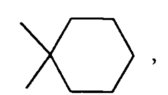 -O-, -S-, -NH-, 〉N-C₁-C₄-Alkyl, -N=N-, -NH-CO-CH=CH-CO-NH-, -NH-CO-CH₂-CH₂-CO-NH- oder 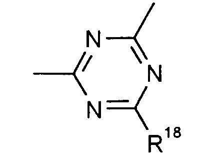 steht, wobei
R¹⁸ für Alkyl, Aryl, vorzugsweise für gegebenenfalls durch Hydroxy, C₁-C₄-Alkoxy, Chlor oder Brom substituiertes C₁-C₄-Alkyl oder für gegebenenfalls durch Hydroxy, C₁-C₄-Alkoxy, Chlor, Brom oder C₁-C₄-Alkyl substituiertes Phenyl oder für einen Rest der Formel 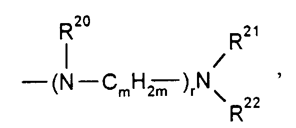 -O-R²³ oder -S-R²⁴ steht,
worin
m für 2 oder 3,
r für 0 oder 1 und
R²⁰, R²¹, R²² und R²³ unabhängig voneinander für Wasserstoff, Alkyl, Alkenyl, Aryl, Aralkyl oder Cycloalkyl stehen, oder
R²¹ und R²² gemeinsam mit dem N-Atom, an das sie gebunden sind, einen 5- oder 6-gliedrigen Ring bilden, und
R⁷ - R¹⁰ unabhängig voneinander für Wasserstoff, SO₃H, C₁-C₄-Alkyl, C₁-C₄-Alkoxy, Chlor oder Brom stehen.

6. Verfahren zur Herstellung von Farbstoffen des Anspruchs 1, dadurch gekennzeichnet, daß man Amine der Formel
D-(NH₂)ₙ (II)
worin
D und n die in Anspruch 1 angegebene Bedeutung haben,
diazotiert und mit Verbindungen der Formel 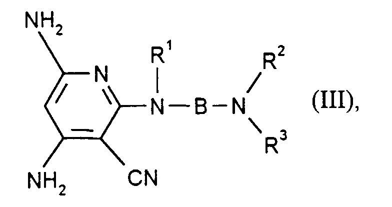 worin
R¹, R² und R³ die in Anspruch 1 angegebene Bedeutung haben, kuppelt.

7. Verfahren zum Färben von natürlichen und synthetischen mit basischen Farbstoffen anfärbbaren Substraten und Massen, dadurch gekennzeichnet, daß man Farbstoffe des Anspruchs 1 verwendet.

8. Verfahren zum Färben von Papier, dadurch gekennzeichnet, daß man Farbstoffe des Anspruchs 1 verwendet.

## Claims

1. Azo dyestuffs of the formula 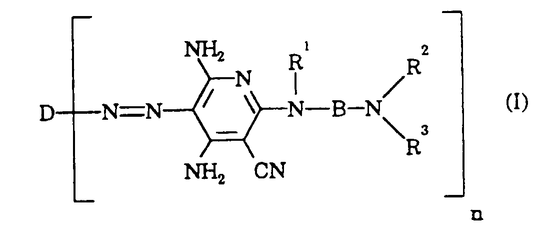 wherein
B represents a bridge member,
R¹ represents hydrogen, alkyl or aryl or
R¹ and R², together with B and the two nitrogen atoms to which they are bonded, form an optionally substituted 5- or 6-membered heterocyclic ring, and in this case B represents a direct bond, -CH₂- or -CH₂CH₂-,
R² and R³ independently of one another represent hydrogen, alkyl, alkenyl or aralkyl or
R² and R³, together with the nitrogen atom to which they are bonded, form an optionally substituted 5- or 6-membered heterocyclic ring,
n represents 2 and
D represents the radical of a tetrazo component of the formula 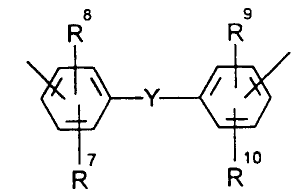 wherein
R⁷ to R¹⁰ independently of one another represent hydrogen, SO₃H, C₁-C₄-alkyl, C₁-C₄-alkoxy, chlorine or bromine,
Y represents a direct bond or a bridge member,
and wherein the cyclic and acyclic radicals in turn can be substituted by radicals customary in dyestuffs chemistry.

2. Azo dyestuffs according to Claim 1
wherein
R¹ represents hydrogen, or represents C₁-C₄-alkyl which is optionally substituted by halogen, hydroxyl, C₁-C₄-alkoxy, cyano, amino or mono- or di-C₁-C₄-alkylamino, or represents C₆-C₁₀-aryl which is optionally substituted by halogen, C₁-C₄-alkyl or C₁-C₄-alkoxy,
R² and R³ independently of one another represent hydrogen, or represent C₁-C₄-alkyl or C₃- or C₄-alkenyl, in each case optionally substituted by hydroxyl, C₁-C₄-alkoxy, chlorine, bromine or cyano, or represent benzyl or phenylethyl, which are in each case optionally substituted by hydroxyl, C₁-C₄-alkoxy, chlorine, bromine, cyano or C₁-C₄-alkyl, or
R¹ and R², together with B and the two nitrogen atoms to which they are bonded,
a) in the case where B represents a direct bond, form a hexahydropyridazine ring which is optionally substituted by C₁-C₄-alkyl,
b) in the case where B represents -CH₂-, form a hexahydropyrimidine ring which is optionally substituted by C₁-C₄-alkyl or
c) in the case where B represents -CH₂CH₂-, form a piperazine ring which is optionally substituted by C₁-C₄-alkyl, or
R² and R³, together with the nitrogen atom to which they are bonded, form a pyrrolidine, piperidine, morpholine, hexahydropyridazine, hexahydropyrimidine or piperazine ring which is optionally substituted by C₁-C₄-alkyl, the C₁-C₄-alkyl substituents optionally being substituted by chlorine, bromine, hydroxyl, cyano, amino or mono- or di-C₁-C₄-alkylamino, and
B represents C₂-C₅-alkylene which is optionally interrupted by
-O-, -S- or 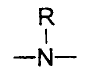 wherein
R represents hydrogen, or represents C₁-C₄-alkyl which is optionally substituted by chlorine, bromine, hydroxyl, cyano, C₁-C₄-alkoxy, amino and mono- and di-C₁-C₄-alkylamino, or represents C₆-C₁₀-aryl which is optionally substituted by fluorine, chlorine, bromine, C₁-C₄-alkyl or C₁-C₄-alkoxy, or
B represents a radical of the formula 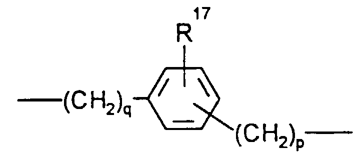 wherein
q represents 0, 1, 2 or 3,
p represents 1, 2 or 3,
(CH₂)ₚ is bonded to the radical NR²R³ and
R¹⁷ represents hydrogen, C₁-C₄-alkyl, C₁-C₄-alkoxy, chlorine or bromine.

3. Dyestuffs according to Claims 1 and 2, wherein Y represents a direct bond or a bridge member of the formula -CO-NH-, -CO-, -NH-CO-NH-, -CH₂-CH₂-, -CH=CH-, -CH₂-, -C(CH₃)₂-, 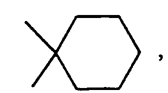 -O-, -S-, -NH-, 〉N-C₁-C₄-alkyl, -N=N-, -NH-CO-CH=CH-CO-NH-, -NH-CO-CH₂-CH₂-CO-NH- or 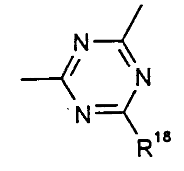 wherein
R¹⁸ represents alkyl or aryl or represents a radical of the formula 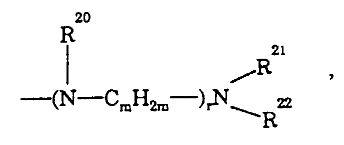 -O-R²³ or -S-R²⁴
wherein
m represents 2 or 3,
r represents 0 or 1 and
R²⁰, R²¹, R²² and R²³ independently of one another represent hydrogen, alkyl, alkenyl, aryl, aralkyl or cycloalkyl, or
R²¹ and R²², together with the N atom to which they are bonded, form a 5- or 6-membered ring.

4. Dyestuffs of Claim 3,
wherein
R¹⁸ represents C₁-C₄-alkyl which is optionally substituted by hydroxyl, C₁-C₄-alkoxy, chlorine or bromine, or represents phenyl which is optionally substituted by hydroxyl, C₁-C₄-alkoxy, chlorine, bromine or C₁-C₄-alkyl, or represents a radical of the formula 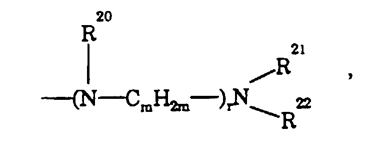 -O-R²³ or -S-R²⁴
wherein
R²⁰, R²¹, R²², R²³ and R²⁴ independently of one another represent hydrogen or C₁-C₄-alkyl or C₂-C₄-alkenyl, in each case optionally substituted by hydroxyl, halogen, cyano or C₁-C₄-alkoxy, or represent benzyl, phenylethyl, phenyl, naphthyl or cyclohexyl, in each case optionally substituted by halogen, C₁-C₄-alkyl, hydroxyl or C₁-C₄-alkoxy, or
R²¹ and R²², together with the N atom to which they are bonded, represent pyrrolidone, piperidine, morpholine or piperazine, in each case optionally substituted by C₁-C₄-alkyl, the external nitrogen atom of which can be alkylated or quaternized by optionally OH- or NH₂-substituted C₁-C₄-alkyl.

5. Dyestuffs of Claim 1 of the formula 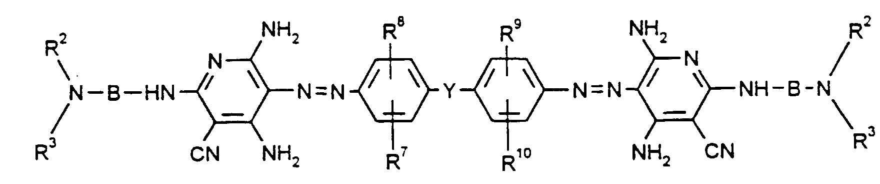 wherein
R² and R³ independently of one another represent C₁-C₄-alkyl, β- or γ-hydroxy-C₂-C₄-alkyl or benzyl, or
R² and R³, together with the nitrogen atom to which they are bonded, form a pyrrolidine, morpholine, piperidine or piperazine ring, the terminal nitrogen atom of which can additionally be substituted by β-hydroxyethyl, and
B represents -CH₂CH₂-, -CH₂CH₂CH₂-, -CH(CH₃)CH₂- or -CH₂CH₂CH₂CH₂-,
Y represents
-CO-NH-, -CO-, -NH-CO-NH-, -CH₂-CH₂-, -CH=CH-, -CH₂-, -C(CH₃)₂-, 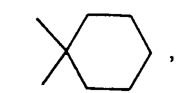 -O-, -S-, -NH-, 〉N-C₁-C₄-alkyl, -N=N-, -NH-CO-CH=CH-CO-NH-, -NH-CO-CH₂-CH₂-CO-NH- or 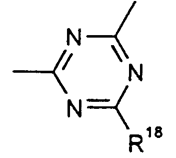 wherein
R¹⁸ represents alkyl or aryl, preferably C₁-C₄-alkyl which is optionally substituted by hydroxyl, C₁-C₄-alkoxy, chlorine or bromine or phenyl which is optionally substituted by hydroxyl, C₁-C₄-alkoxy, chlorine, bromine or C₁-C₄-alkyl, or represents a radical of the formula 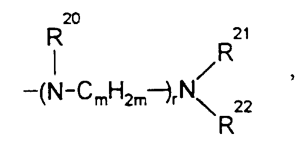 -O-R²³ or -S-R²⁴
wherein
m represents 2 or 3,
r represents 0 or 1 and
R²⁰, R²¹, R²² and R²³ independently of one another represent hydrogen, alkyl, alkenyl, aryl, aralkyl or cycloalkyl, or
R²¹ and R²², together with the N atom to which they are bonded, form a 5- or 6-membered ring and
R⁷ - R¹⁰ independently of one another represent hydrogen, SO₃H, C₁-C₄-alkyl, C₁-C₄-alkoxy, chlorine or bromine.

6. Process for the preparation of dyestuffs of Claim 1, characterized in that amines of the formula
D-(NH₂)ₙ (II)
wherein
D and n have the meaning given in Claim 1,
are diazotized and the diazotization products are coupled with compounds of the formula 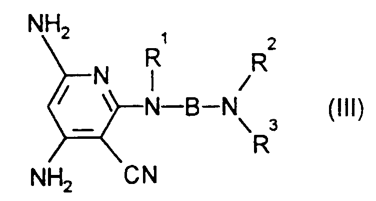 wherein
R¹, R² and R³ have the meaning given in Claim 1.

7. Process for dyeing naturally occurring and synthetic substrates and compositions which can be dyed with basic dyestuffs, characterized in that dyestuffs of Claim 1 are used.

8. Process for dyeing paper, characterized in that dyestuffs of Claim 1 are used.

## Revendications

1. Colorants azoïques de formule : 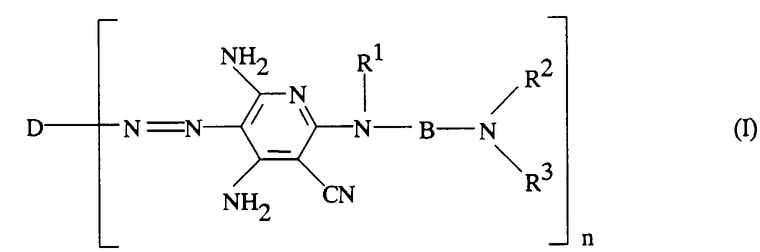 où
B est un membre de pont,
R¹ est un hydrogène, alkyle ou aryle, ou
R¹ et R² représentent avec B et les deux atomes d'azote auxquels ils sont liés un hétérocycle de 5 ou 6 maillons éventuellement substitué, et dans ce cas B représente une liaison directe -CH₂-, ou -CH₂CH₂-,
R² et R³ représentent indépendamment l'un de l'autre un hydrogène, alkyle, alcényle ou aralkyle, ou
R² et R³ avec l'atome d'azote auquel ils sont fixés, forment un hétérocycle de 5 ou 6 maillons substitué le cas échéant,
n représente 2, et
D représente le reste d'un composant tétraazo de formule 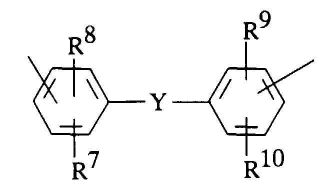
où
R⁷ à R¹⁰ représentent indépendamment l'un de l'autre un hydrogène, SO₃H, alkyle C₁-C₄, alcoxy C₁-C₄, chlore ou brome,
Y est une liaison directe ou un membre de pont,
et où les restes cycliques et non cycliques de leur côté peuvent être substitués par des restes usuels dans la chimie des colorants.

2. Colorants azoïques selon la revendication 1,
où
R¹ représente un hydrogène, un alkyle C₁-C₄ le cas échéant substitué par un halogène, un hydroxy, un alcoxy C₁-C₄, un cyano, un amino, un mono ou dialkylamino C₁-C₄, ou un aryle C₆-C₁₀ substitué le cas échéant par un halogène, un alkyle C₁-C₄, un alcoxy C₁-C₄,
R² et R³ représentent indépendamment l'un de l'autre un hydrogène, un alkyle C₁-C₄ substitué respectivement le cas échéant par un hydroxy, alcoxy C₁-C₄, chlore, brome ou cyano ou un alcényle C₃ ou C₄ ou un benzyle ou un phényléthyle, qui sont substitués respectivement le cas échéant par un hydroxy, alcoxy C₁-C₄, chlore, brome, cyano ou alkyle C₁-C₄, ou
R¹ et R² avec B et les deux atomes d'azote auxquels ils sont fixés,
a) dans le cas où B représente une liaison directe, forment un cycle hexahydropyridazine substitué le cas échéant par un alkyle C₁-C₄,
b) dans le cas où B représente -CH₂-, forment un cycle hexahydropyrimidine substitué le cas échéant par un alkyle C₁-C₄ ou
c) dans le cas où B représente -CH₂CH₂-, forment un cycle pipérazine substitué le cas échéant par un alkyle C₁-C₄, ou
R² et R³ avec l'atome d'azote auquel ils sont fixés, forment un cycle pyrrolidine, pipéridine, morpholine, hexahydropyridazine, hexahydropyrimidine, pipérazine substitué le cas échéant par un alkyle en C₁-C₄, où les substituants alkyles C₁-C₄ peuvent être substitués le cas échéant par un chlore, brome, hydroxy, cyano, amino, mono- ou dialkylamino C₁-C₄, et
B représente un alkylène C₂-C₅ interrompu le cas échéant par -O- , -S- ou 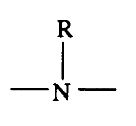 où
R représente un hydrogène, un alkyle C₁-C₄ substitué le cas échéant par un chlore, brome, hydroxy, cyano, alcoxy C₁-C₄, amino, mono- et diakylamino C₁-C₄, un aryle C₆-C₁₀, substitué le cas échéant par un fluor, chlore, brome, alkyle C₁-C₄, alcoxy C₁-C₄, ou
B représente un reste de formule : 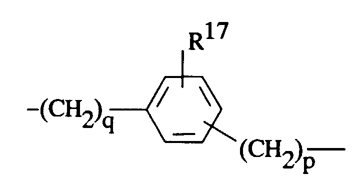 où
q représente 0, 1, 2 ou 3,
p représente 1, 2 ou 3,
(CH₂)ₚ est lié au reste NR²R³, et
R¹⁷ représente un hydrogène, alkyle C₁-C₄, alcoxy C₁-C₄, chlore ou brome.

3. Colorants selon les revendications 1 et 2, où Y représente une liaison directe ou un membre de pont de formule
-CO-NH-, -CO-, -NH-CO-NH-, -CH₂-CH₂-, -CH=CH-, -CH₂-, -C(CH3)2-, 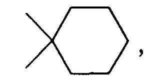 -O-, -S-, -NH-, 〉N-alkyle C₁-C₄, -N=N-, -NH-CO-CH=CH-CO-NH-, -NH-CO-CH₂-CH₂-CO-NH- ou 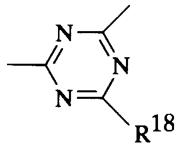 où
R¹⁸ représente un alkyle, aryle ou un reste de formule : 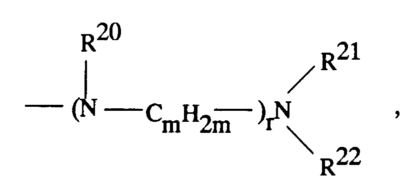 -O-R²³ ou -S-R²⁴,
où
m représente 2 ou 3,
r représente 0 ou 1 et
R²⁰, R²¹, R²² et R²³ indépendamment l'un de l'autre représentent un hydrogène, alkyle, alcényle, aryle, aralkyle ou cycloalkyle, ou
R²¹ et R²² avec l'atome de N auquel ils sont liés forment un cycle à 5 ou 6 maillons substitué le cas échéant.

4. Colorants selon la revendication 3,
où
R¹⁸ représente un alkyle C₁-C₄ substitué le cas échéant par un hydroxy, alcoxy C₁-C₄, chlore ou brome ou un phényle substitué le cas échéant par un hydroxy, alcoxy C₁-C₄, chlore, brome ou alkyle C₁-C₄ ou un reste de formule 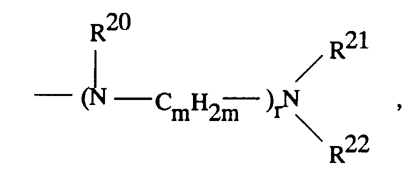 -O-R²³ ou -S-R²⁴,
où
R²⁰, R²¹, R²², R²³ et R²⁴ représentent indépendamment l'un de l'autre un hydrogène, un alkyle C₁-C₄ ou alcényle C₂-C₄ substitué respectivement le cas échéant par un hydroxy, halogène, cyano ou alcoxy C₁-C₄ ou un benzyle, phényléthyle, phényle, naphtyle ou cyclohexyle substitué respectivement le cas échéant par un halogène, alkyle C₁-C₄, hydroxy ou alcoxy C₁-C₄ ou
R²¹ et R²² représentent avec l'atome de N auquel ils sont liés un cycle pyrrolidone, pipéridine, morpholine ou pipérazine respectivement substitué le cas échéant par un alkyle C₁-C₄, dont l'atome d'azote externe peut être alkylé ou quaternisé par un alkyle C₁-C₄ substitué le cas échéant par OH ou NH₂.

5. Colorants selon la revendication 1 de formule 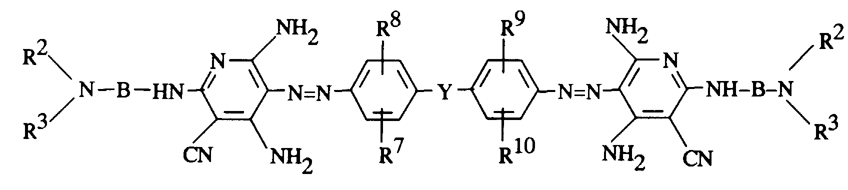 où
R² et R³ représentent indépendamment l'un de l'autre un alkyle C₁-C₄, un β- ou γ-hydroxyalkyle C₂-C₄ ou un benzyle, ou
R² et R³ avec l'atome d'azote auquel ils sont liés forment un cycle pyrrolidine, morpholine, pipéridine ou pipérazine, dont l'atome d'azote terminal peut être substitué en plus par un β-hydroxyéthyle,
B représente -CH₂CH₂-, -CH₂CH₂CH₂-, -CH(CH₃)CH₂- ou -CH₂CH₂CH₂CH₂-
Y représente
-CO-NH-, -CO-, -NH-CO-NH-, -CH₂-CH₂-, -CH=CH-, -CH₂-, -C(CH₃)₂-, 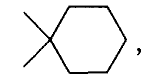 -O-, -S-, -NH-, 〉N-alkyle C₁-C₄, -N=N-, -NH-CO-CH=CH-CO-NH-, -NH-CO-CH₂-CH₂-CO-NH- ou 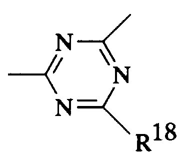 où
R¹⁸ représente un alkyle, aryle, de préférence un alkyle C₁-C₄ substitué le cas échéant par un hydroxy, alcoxy C₁-C₄, chlore ou brome ou un phényle substitué le cas échéant par un hydroxy, alcoxy C₁-C₄, chlore, brome ou alkyle C₁-C₄ ou un reste de formule 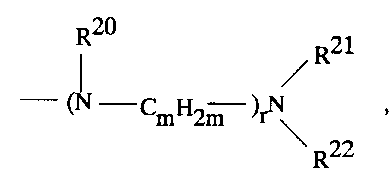 -O-R²³ ou -S-R²⁴,
où
m représente 2 ou 3,
r représente 0 ou 1 et
R²⁰, R²¹, R²² et R²³ indépendamment l'un de l'autre représentent un hydrogène, alkyle, alcényle, aryle, aralkyle ou cycloalkyle ou
R²¹ et R²² avec l'atome de N auquel ils sont liés forment un cycle à 5 ou 6 maillons, et
R⁷ - R¹⁰ indépendamment l'un de l'autre représentent un hydrogène, SO₃H, alkyle C₁-C₄, alcoxy C₁-C₄, chlore ou brome.

6. Procédé de production de colorants selon la revendication 1, caractérisé en ce qu'on diazote des amines de formule
D-(NH₂)ₙ (II)
où
D et n ont la signification donnée pour la revendication 1, et on couple avec des composés de formule 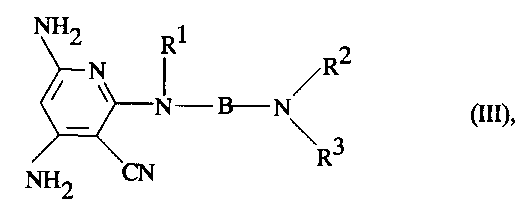 où
R¹, R² et R³ ont la signification donnée à la revendication 1.

7. Procédé de coloration de substrats et de masses naturels et synthétiques qu'on peut colorer par des colorants basiques, caractérisé en ce qu'on utilise des colorants selon la revendication 1.

8. Procédé de coloration du papier, caractérisé en ce qu'on utilise des colorants selon la revendication 1.
